## Europäisches Patentamt
## European Patent Office
## Office européen des brevets

(19)

(11) Veröffentlichungsnummer: **0 285 817**
**B1**

(12)
# EUROPÄISCHE PATENTSCHRIFT

(45) Veröffentlichungstag der Patentschrift:
06.06.90

(51) Int. Cl.⁵: **B60T 13/14, F15B 1/02**

(21) Anmeldenummer: 88103335.1

(22) Anmeldetag: 04.03.88

(54) Medienübertrager.

(30) Priorität: 08.04.87 DE 3711852

(43) Veröffentlichungstag der Anmeldung:
12.10.88 Patentblatt 88/41

(45) Bekanntmachung des Hinweises auf die Patenterteilung:
06.06.90 Patentblatt 90/23

(84) Benannte Vertragsstaaten:
AT DE FR GB SE

(56) Entgegenhaltungen:
EP-A- 0 079 715
FR-A- 2 027 197
FR-A- 2 539 187
US-A- 3 845 776

(73) Patentinhaber: ROBERT BOSCH GMBH, Postfach 50,
D-7000 Stuttgart 1(DE)

(72) Erfinder: Kehl, Georg, Taläckerstrasse 61,
D-7000 Stuttgart 40(DE)
Erfinder: Siegel, Heinz, Ing. grad., Hohenloher
Strasse 86, D-7000 Stuttgart 40(DE)

**Beschreibung**

Die Erfindung geht aus von einem Medienübertrager zur Druckversorgung eines mit einem ersten Medium betriebenen ersten Versorgungskreises aus einem mit einem zweiten Medium betriebenen, eine Druckquelle aufweisenden zweiten Versorgungskreises der im Oberbegriff des Anspruchs 1 definierten Gattung.

Solche Medienübertrager oder Medienpumpen werden zur Druckversorgung zweier vollständig voneinander getrennter Hydraulikkreise, deren unterschiedliche Druckmedien, z.B. Mineralöl und Bremsflüssigkeit, dem speziellen Verwendungszweck angepaßt sind, aus nur einer Druckquelle verwendet, so daß nur eine Hydraulikpumpe mit Antrieb erforderlich ist. Beispiele für den Einsatz solcher Medienübertrager sind die Versorgung eines hydraulischen Niveaureglers aus einem Versorgungskreis für die Bremsanlage, die Versorgung eines hydraulischen Bremskraftverstärkers oder eines ABS-Bremsgerätes.

Bei einem bekannten Medienübertrager dieser Art (DE-A 33 00 493) sind die Arbeitskammern durch den Arbeitskolben voneinander getrennt und über zwei im Axialabstand voneinander angeordnete Ringdichtungen zwischen Außenwand des Arbeitskolbens und Innenwand des Arbeitszylinders gegeneinander abgedichtet. Als Dichtungsmaterial werden unterschiedliche Werkstoffe verwendet, die mit den Medien, mit denen sie jeweils in Berührung kommen, verträglich sind. In der Regel sind dabei die Dichtungswerkstoffe aber nicht mit den jeweils anderen Medium verträglich.

Bei der erforderlichen Dichtigkeitsprüfung solcher Medienübertrager führen auftretende Undichtigkeiten zu einem Austreten des einen oder anderen Mediums durch die Dichtungsringe hindurch, so daß nicht verträgliche Dichtungswerkstoffe und Medien in Kontakt kommen, wodurch die Dichtungswerkstoffe angegriffen werden. Mitunter führt ein solcher Kontakt erst viel später zu einer Veränderung des Dichtungswerkstoffes, so daß geprüfte Medienübertrager nach kurzem Einsatz fehlerhaft und damit unbrauchbar werden. Auch während der Montage können verträgliche Dichtungsmaterialen oder Dichtungspasten und Medien versehentlich in Berührung kommen und Schädigungen bewirken. Bei Montage und Prüfung solcher Medienübertrager ist daher größte Sorfalt darauf zu verwenden, daß sich die Medien nicht mischen können oder unverträgliche Dichtungswerkstoffe und Medien nicht miteinander in Kontakt kommen. Dies macht Montage und Prüfung zeit- und kostenaufwendig.

Der erfindungsgemäße Medienübertrager mit den kennzeichnenden Merkmalen des Anspruchs 1 hat demgegenüber den Vorteil, daß die beiden jeweils mit einem Medium beaufschlagten Teile des Medienübertragers, also der Antriebsteil mit beispielsweise dem Medium Mineralöl und der Pumpenteil mit beispielsweise dem Medium Bremsflüssigkeit, völlig unabhängig voneinander montiert und auf Dichtheit geprüft werden können. Bei getrennten Montage- und Prüfplätzen der beiden Übertragerteile ist ein Zusammenkommen von unverträglichen Medien und Dichtungswerkstoffen und Dichtungspasten zuverlässig ausgeschlossen. Nach Prüfung werden die beiden Übertragerteile miteinander verschraubt, wodurch die beiden Kolbenteile selbsttätig miteinander in Eingriff kommen.

Durch die konstruktive Ausgestaltung des erfindungsgemäßen Medienübertragers wird somit die Fertigungssicherheit wesentlich erhöht und unnötiger Ausschuß vermieden. Damit können insgesamt die Fertigungskosten gesenkt werden.

Durch die in den weiteren Ansprüchen aufgeführten Maßnahmen sind vorteilhafte Weiterbildungen und Verbesserungen der im Anspruch 1 angegebenen Schaltungsanordnung möglich.

Eine vorteilhafte Ausführungsform der Erfindung ergibt sich dabei aus Anspruch 3. Durch diese Maßnahmen wird auch bei in Betrieb des Medienübertragers auftretenden kleineren Leckagen zuverlässig verhindert, daß ein Medium an die nicht mit ihm verträglichen Dichtung für das andere Medium gelangt. Die erfindungsgemäße Schürze hält jeweils die an der einen oder anderen Dichtung austretenden Leckmengen von der jeweils anderen Dichtung fern und leitet diese zu der in Einbaulage des Gehäuses am Grund desselben Vorgesehenen Ablaufbohrung.

Die Erfindung ist anhand eines in der Zeichnung dargestellten Ausführungsbeispiels in der nachfolgenden Beschreibung näher erläutert. Dabei zeigt die Zeichnung einen Längsschnitt eines Medienübertragers.

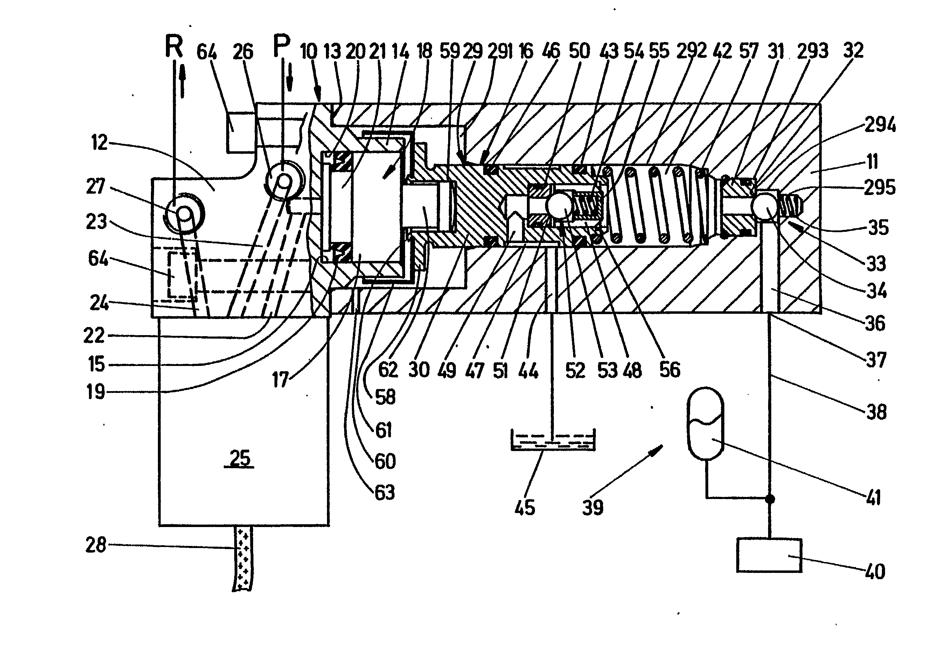

Der in Fig. 1 im Längsschnitt zu sehende Medienübertrager weist ein zweiteiliges Gehäuse 10 aus einem Unterteil 11 und einem darauf stirnseitig aufgesetzten Deckelteil 12 auf. Der Deckelteil 12 trägt auf seiner dem Unterteil 11 zugekehrten Stirnfläche eine äußere Paßringfläche 13 und eine diese nach innen begrenzende hohlzylindrische Nabe 14, deren Außendurchmesser zum freien Ende hin einmal abgestuft ist. Die zum freien Ende hin offene konzentrische Sackbohrung 15 der Nabe 14 bildet einen Abschnitt eines Arbeitszylinders 16 des Medienübertragers, in welchem ein Kolbenteil 17 eines zweiteiligen, mit dem Arbeitszylinder 16 zusammenwirkenden Arbeitskolbens 18 axial verschieblich geführt ist. Der Kolbenteil 17 ist mit einer Dichtmanschette 19 gegenüber der Innenwand 20 der Sackbohrung 15 abgedichtet und begrenzt eine als Antriebskammer 21 wirkende Arbeitskammer des Medienübertragers. In dem Deckelteil 12 sind drei Druckmittelbohrungen 22 - 24 eingebracht, die alle drei zu einem seitlich am Deckelteil 12 angebrachten Magnetventil 25 führen. Das Magnetventil 25 ist im Beispiel als 3/2-Wegeventil ausgebildet. Von den drei Druckmittelbohrungen 22 - 24 mündet die Druckmittelbohrung 22 in der Antriebskammer 21, die Druckmittelbohrung 23 an einem Druckmittelanschluß 26, der an eine Druckmittelquelle anschließbar ist, und die dritte Druckmittelbohrung 24 an einem Entlastungsanschluß 27, der über eine Druckmittelrückführleitung mit einem Druckmittelvorratsbehälter verbindbar ist. Die Antriebskammer 21 und das Magnetventil 25 sind damit in einem Druckmittelkreis eingebunden, dessen Druckmittel oder erstes Medium, z.B. Mineralöl, am Druckmittelanschluß 26 unter vorgegebenem Druck steht. Der Druck wird üblicherweise durch eine hier nicht dargestellte Hydraulikpumpe erzeugt, mit welcher ein mit dem Druckmittelanschluß 26 in Verbindung stehender Druckspeicher gespannt wird. Durch Umschalten des Magnetventils 25 kann nunmehr die Antriebskammer 21 wechselweise mit Druckmittel oder Medium gefüllt oder wieder von dem Druckmittel entlastet werden, das über den Entlastungsabschluß 27 abfließt. Die elektrische Steuerleitung für das Magnetventil 25 ist in der Zeichnung mit 28 bezeichnet.

Im Unterteil 11 ist mittig eine Sackbohrung 29 mit insgesamt fünf Bohrungsabschnitten 291 - 295 eingebracht, deren Durchmesser zum Sackgrund hin abnehmen. Der zum Deckelteil 12 hin offene Bohrungsabschnitt 291 mit dem größten Bohrungsdurchmesser bildet eine Paßaufnahme für die Nabe 14 des Deckelteils 12. Der zweite Bohrungsabschnitt 292 bildet den zweiten Zylinderabschnitt des Arbeitszylinders 16, in welchem ein zweiter Kolbenteil 30 axial verschieblich geführt ist. Der dritte Bohrungsabschnitt 293 bildet eine Aufnahme für einen Ventilkörper 31 mit Ventilsitz 32 eines Rückschlagventils 33, dessen kugelförmiges Ventilglied 34 in dem vierten Bohrungsabschnitt 294 einliegt und von einer im fünften Bohrungsabschnitt 295 einliegenden Ventilfeder 35 gegen den Ventilsitz 32 gedrückt wird. Im Bohrungsabschnitt 294 mündet eine Radialbohrung 36, die mit einem auf der Außenseite des Unterteils 11 angeordneten Druckmittelanschluß 37 in Verbindung steht. Der Druckmittelanschluß 37 dient zum Anschließen eines Versorgungskreises 39, in welchen ein Verbraucher 40 und ein Druckspeicher 41 angeordnet sind. Der zweite Versorgungskreis 39 ist mit einem zweiten Druckmittel oder Medium, z.B. Bremsflüssigkeit, gefüllt.

Der im zweiten Bohrungsabschnitt 292 axial verschiebliche Kolbenteil 30 begrenzt zusammen mit dem Rückschlagventil 33 eine als Pumpenkammer 42 wirkende Arbeitskammer im Arbeitszylinder 16 des Medienübertragers. Diese Pumpenkammer 42 ist mittels eines im Kolbenteil 30 einliegenden Dichtungsringes 43, der an der Innenwand des Bohrungsabschnittes 292 anliegt, abgedichtet. Am Umfang des Kolbenteils 30 ist eine Ringnut 44 vorgesehen, deren axiale Breite so groß bemessen ist, daß sie über den gesamten Hubweg des Kolbenteils 30 mit einer an der Außenseite des Unterteils 11 mündenden Radialbohrung 44 in Verbindung steht. An diese Radialbohrung 44 wird ein Druckmittel-Reservoir 45 des Versorgungskreises 39 angeschlossen. Ein zweiter Dichtungsring 46, der im axialen Abstand von dem ersten Dichtungsring 43 auf der gegenüberliegenden Seite der Ringnut 47 im Mantel des Kolbenteils 30 gehalten ist, sorgt zusammen mit dem Dichtungsring 43 für eine Abdichtung der Ringnut 47.

Der Kolbenteil 30 weist eine zu der Pumpenkammer 42 hin offene, abgestufte Sackbohrung 48 auf, in deren den kleineren Bohrungsdurchmesser aufweisendem Bohrungsabschnitt eine Radialbohrung 49 mündet, welche eine Verbindung zwischen der Ringnut 47 und der Sackbohrung 48 herstellt. An der Übergangsschulter zwischen den beiden Bohrungsabschnitten der Sackbohrung 48 liegt ein Ventilkörper 50 mit Ventilsitz 51 eines Saugventils 52 an, dessen kugelförmiges Ventilglied 53 sich unter der Wirkung einer Ventilfeder 54 auf den Ventilsitz 51 aufpreßt. Ventilglied 53 und Ventilfeder 54 sind in einem Käfig 55 gehalten, der mittels eines Sprengringes 56 in der Sackbohrung 48 gehalten ist. Der Kolbenteil 30 stützt sich über eine Rückstellfeder 57 an der Übergangsschulter zwischen dem zweiten Bohrungsabschnitt 292 und dem dritten Bohrungsabschnitt 293 ab.

An seinem aus dem zweiten Bohrungsabschnitt 292 herausragenden, innerhalb des ersten Bohrungsabschnittes 291 befindlichen Ende ist der Kolbenteil 30 mit einem Tragflansch 58 versehen und weist eine zentrale, zylinderförmige Ausnehmung 59 auf, die an ihrem Mündungsrand von einem vom Tragflansch 58 axial vorstehenden ringförmigen Kragen 60 umgeben ist. Auf der Stirnfläche des Tragflansches 58 ist eine kappen- oder glockenartige Schürze 61 befestigt, und zwar durch Umbördelung des Kragens 60. Die Schürze 61 hat einen von dem Tragflansch 58 axial wegstrebenden Hülsenabschnitt, mit welchem die Schürze 61 den vorderen, im Durchmesser abgestuften Teil der Nabe 14 des Deckelteils 12 übergreift. In die mittige Ausnehmung 59 ragt ein Druckzapfen 62 hinein, der einstückig mit dem in der Nabe 14 geführten Kolbenteil 17 ist. Unter der Wirkung der Rückstellfeder 57 stützt sich der im Bohrungsabschnitt 292 des Unterteils 11 geführte Kolbenteil 30 auf der vorzugsweise gekrümmt ausgebildeten Stirnseite des Druckzapfens 62 ab. In dem ersten Bohrungsabschnitt 291 ist noch eine Ablaufbohrung 63 vorgesehen, die so angeordnet ist, daß sie sich in der in der Zeichnung dargestellten Einbaulage des Medienübertragers an der tiefsten Stelle des Bohrungsabschnittes 291 befindet. Über diese Ablaufbohrung 63 können kleinere, in den Bohrungsabschnitt 291 eindringende Leckmengen, die über die Dichtungsringe 43 und 46 oder die Dichtmanschette 19 aus den Arbeitskammern 21,42 austreten, abfließen. Unterteil 11 und Deckelteil 12 sind durch Befestigungsschrauben 64 miteinander verbunden.

Die Wirkungsweise des Medienübertragers ist wie folgt:

Soll der Druck im Druckspeicher 41 des Versorgungskreises 39 auf ein bestimmtes Niveau angehoben werden, so wird das Magnetventil 25 wiederholt mit Stromerregerimpulsen beaufschlagt. Das Magnetventil 25 schaltet entsprechend zwischen seiner Ruhe- und Arbeitsstellung hin und her. In der Zeichnung ist der Medienübertrager bei in Ruhestellung befindlichem Magnetventil 25 dargestellt. Schaltet letzteres um, so füllt sich die Antriebskammer 21 über den Druckmittelanschluß 26 und die Druckmittelbohrung 22 mit unter Druck stehendem Medium, z.B. Mineralöl. Der Kolbenteil 17 des Arbeitskolbens 18 wird in der Sackbohrung 15 des Deckelteils 12 axial, in der Zeichnung nach rechts, verschoben. Über den Druckzapfen 62 wird der Kolbenteil 30 im Bohrungsabschnitt 292 verschoben, wodurch das Volumen der Pumpenkammer 42 reduziert wird. Der Druck in der mit dem zweiten Medium, z.B. Bremsflüssigkeit, gefüllten Pumpenkammer 42 steigt an, und bei Überwindung des Vorspanndruckes des Rückschlagventils 33 strömt das Medium mit vorgegebenem Druck in den Druckspeicher 41.

Wird das Magnetventil 25 wieder abgeschaltet, so wird die Antriebskammer 21 über die Druckmittelbohrung 22, das in Ruhestellung stehende Magnetventil 25 und die Druckmittelbohrung 24 mit dem Entlastungsanschluß 27 verbunden. Die expandierende Rückstellfeder 57 schiebt die beiden Kolbenteile 30,17 in der Zeichnung nach links, so daß das Medium aus der Antriebskammer 21 abfließt. Das Saugventil 52 im Kolbenteil 30 öffnet, und die Pumpenkammer 42 wird mit Medium aus dem Druckmittel-Reservoir 45 gefüllt. Danach wiederholt sich der beschriebene Vorgang ein oder mehrere Male, bis der Druckspeicher 41 im Versorgungskreis 39 mit dem gewünschten Versorgungsdruck für den Verbraucher 40 gespannt ist.

**Patentansprüche**

1. Medienübertrager zur Druckversorgung eines mit einem zweiten Medium betriebenen zweiten Versorgungskreises (39) aus einem mit einem ersten Medium betriebenen, eine Druckquelle aufweisenden ersten Versorgungskreis, mit einem einen Arbeitszylinder (16) aufweisenden Gehäuse (10, 11) und einem im Arbeitszylinder geführten Arbeitskolben (30) mit Rückstellfeder (57), der stirnseitig zwei Arbeitskammern (21, 42) begrenzt, von denen die eine als Antriebskammer (21) mit dem unter Druck stehenden ersten Medium beaufschlagbar (P) und entlastbar (R) und die andere als Pumpenkammer (42) beim Hub des Arbeitskolbens (30) mit dem zweiten Medium füllbar und über ein Rückschlagventil (33) wieder entleerbar ist, dadurch gekennzeichnet, daß das Gehäuse (10), der Arbeitszylinder (16) und der Arbeitskolben (18) jeweils zweiteilig ausgeführt sind, daß in jedem Gehäuseteil (10, 11) ein Kolbenteil (17, 30) in einem Zylinderabschnitt (15, 292) geführt und zum Abschließen der von ihm begrenzten Arbeitskammer (21, 42) gegenüber dessen Innenwand abgedichtet ist und daß die beiden Gehäuseteile (10, 11) bei fluchtenden Achsen der Zylinderabschnitte (15, 292) und stirnseitig unter der Wirkung der Rückstellfeder (57) aneinanderliegenden Kolbenteilen (17, 30) stirnseitig aneinanderliegen und miteinander verbunden sind.

2. Medienübertrager nach Anspruch 1, dadurch gekennnzeichnet, daß die Rückstellfeder (57) den die Pumpenkammer (42) begrenzenden Kolbenteil (30) in Ausschieberichtung aus dem Gehäuseteil (11) belastet.

3. Medienübertrager nach Anspruch 1 oder 2, dadurch gekennzeichnet, daß der Kolbenteil (30) an seinem aus dem Zylinderabschnitt (292) vorstehenden Ende eine glockenartige Schürze (61) trägt, die mit Spiel einen den anderen Zylinderabschnitt (15) umschließenden nabenartigen Vorsprung (14) des anderen Gehäuseteils (12) übergreift, und daß im Verschiebebereich der Schürze (61) einer der Gehäuseteile (11) eine Ablaufbohrung (63) zum Abführen von Leckmedium aufweist.

4. Medienübertrager nach Anspruch 2, dadurch gekennzeichnet, daß die axiale Länge der Schürze (61) wenigstens etwa gleich der maximalen Verschiebebewegung der Kolbenteile (17,30) bemessen ist.

5. Medienübertrager nach Anspruch 3 oder 4, dadurch gekennzeichnet, daß die Schürze (61) an einem auf der Stirnfläche des Kolbenteils (30) axial vorspringenden ringförmigen Kragen (60) durch Umbördelung befestigt ist.

6. Medienübertrager nach einem der Ansprüche 1–5, dadurch gekennzeichnet, daß der die Antriebskammer (21) enthaltende Gehäuseteil (12) als Deckel ausgebildet ist, der mit einem von einem Ringflansch (13) axial vorspringenden ringförmigen Zentriersteg (14) in eine ringförmige Zentrieraufnahme (291) im anderen Gehäuseteil (11) eingreift und an dem anderen Gehäuseteil (11) mittels durch den Ringflansch (13) hindurchgeführter Schrauben (64) befestigt ist.

7. Medienübertrager nach einem der Ansprüche 1–6, dadurch gekennzeichnet, daß der die Pumpenkammer (42) begrenzende Kolbenteil (30) ein Saugventil (52) enthält, das unabhängig von der Verschiebebewegung des Kolbenteils (30) mit einer gehäuseseitigen Zulaufbohrung (44, 49) für das zweite Medium und mit der Pumpenkammer (42) in Verbindung steht.

8. Medienübertrage nach einem der Ansprüche 1–7, dadurch gekennzeichnet, daß das Rückschlagventil (33) in dem die Pumpenkammer (42) enthaltenden Gehäuseteil (11) integriert ist.

9. Medienübertrager nach einem der Ansprüche 1–8, dadurch gekennzeichnet, daß mit dem die Antriebskammer (21) enthaltenden Gehäuseteil (12) ein Magnetventil (25) fest verbunden ist, das über Gehäusebohrungen (22–24) mit einem Zulauf (26) und einem Ablauf (27) für das erste Medium und mit der Antriebskammer (21) in Verbindung steht.

**Claims**

1. Inter-fluid transmitter for the supply of pressure to a second supply circuit (39) driven with a second fluid from a first supply circuit which is driven with a first fluid and has a pressure source, with a housing (10, 11) having a working cylinder (16) and a working piston (30) with return spring (57) which is guided in the working cylinder and at the end face bounds two working chambers (21, 42), one of which, as the drive chamber (21), can be acted upon (P) by the pressurized first fluid and released (R), and the other of which, as the pump chamber (42), can be filled with the second medium on the stroke of the working piston (30) and can be emptied again by means of a non-return valve (33), characterized in that the housing (10) of the working cylinder (16) and the working piston (18) are each in two parts, in that in each housing part (10, 11) a piston part (17, 30) is guided in a cylinder section (15, 292) and for shutting off the working chamber (21, 42) bounded by it is sealed off from the inside wall of said section, and in that when the axes of the cylinder sections (15, 292) are in line with each other and piston parts (17, 30) rest with their end faces against each other under the effect of the return spring (57) the two housing parts (10, 11) rest with their end faces against each other and are connected to each other.

2. Inter-fluid transmitter according to Claim 1, characterized in that the return spring (57) loads the piston part (30) bounding the pump chamber (42) in the slide-out direction out of the housing part (11).

3. Inter-fluid transmitter according to Claim 1 or 2, characterized in that the piston part (30) at its end projecting from the cylinder section (292) bears a bell-type apron (61) which with play overlaps a bosstype projection (14) of the other housing part (12) enclosing the other cylinder section (15), and in that in the displacement region of the apron (61) one of the housing parts (11) has a drainage hole (63) to drain off leaking fluid.

4. Inter-fluid transmitter according to Claim 2, characterized in that the axial length of the apron (61) is made at least approximately the same as the maximum displacement movement of the piston parts (17, 30).

5. Inter-fluid transmitter according to Claim 3 or 4, characterized in that the apron (61) is fixed by flanging on an annular collar (60) projecting axially on the end face of the piston part (30).

6. Inter-fluid transmitter according to one of Claims 1–5, characterized in that the housing part (12) containing the drive chamber (21) is designed as a cover which with an annular centring arm (14) projecting axially from an annular flange (13) engages in an annular centring socket (291) in the other housing part (11) and is fixed on the other housing part (11) by means of screws (64) passed through the annular flange (13).

7. Inter-fluid transmitter according to one of Claims 1–6, characterized in that the piston part (30) bounding the pump chamber (42) contains a suction valve (52) which independently of the displacement movement of the piston part (30) is connected to an inlet hole (44, 49), provided on the housing side, for the second medium and to the pump chamber (42).

8. Inter-fluid transmitter according to one of Claims 1–7, characterized in that the non-return valve (33) is integral with the housing part (11) containing the pump chamber (42).

9. Inter-fluid transmitter according to one of Claims 1–8, characterized in that a solenoid valve (25), which is connected by means of housing bores (22–24) to an inlet (26) and an outlet (27) for the first fluid and to the drive chamber (21), is fixed to the housing part (12) containing the drive chamber (21).

## Revendications

1. Transmetteur de fluide pour l'alimentation sous pression d'un second circuit d'alimentation (39) exploité avec un second fluide, à partir d'un premier circuit d'alimentation exploité avec un premier fluide et comportant une source de pression, ce transmetteur de fluide comportant un boîtier (10, 11) avec un cylindre de travail (16) et un piston de travail (30) guidé dans le cylindre de travail, avec un ressort de rappel (57), ce piston délimitant frontalement deux chambres de travail (21, 42), dont l'une jouant le rôle de chambre d'entraînement (21) est susceptible d'être alimentée (P) avec le premier fluide se trouvant sous pression et étant susceptible d'être vidée, tandis que l'autre chambre jouant le rôle de chambre de pompage (42) est susceptible d'être remplie lors de la course du piston de travail (30) avec le deuxième fluide et est susceptible d'être vidée à nouveau par l'intermédiaire d'une soupape de retenue (33), transmetteur de fluide caractérisé en ce que le boîtier (10), le cylindre de travail (16) et le piston de travail (18) sont respectivement réalisés en deux parties, en ce que dans chaque partie de boîtier (10, 11) une partie de piston (17, 30) est guidée dans un tronçon de cylindre (15, 292), et pour fermer la chambre de travail (21, 42) délimitée par cette partie de piston, celle-ci est étanchée par rapport à la paroi interne du tronçon de cylindre, et en ce que, alors que les axes des tronçons de cylindre (15, 292) sont alignés et que les parties de piston (17, 30) s'appliquent frontalement l'une contre l'autre sous l'action du ressort de rappel (57), les deux parties de boîtier (10, 11) sont appliquées frontalement l'une contre l'autre et sont reliées ensemble.

2. Transmetteur de fluide selon la revendication 1, caractérisé en ce que le ressort de rappel (57) sollicite la partie de piston (30) délimitant la chambre de pompage (42) vers la sortie de la partie de boîtier (11).

3. Transmetteur de fluide selon la revendication 1 ou la revendication 2, caractérisé en ce que la partie de piston (30) porte à son extrémité faisant saillie hors du tronçon de cylindre (292) une jupe en forme de cloche (61), qui recouvre avec du jeu une saillie en forme de moyeu (14), entourant l'autre tronçon de cylindre (15), de l'autre partie (12) du boîtier, tandis que dans la zone de déplacement de la jupe (61) une des parties du boîtier (11), comporte un perçage d'évacuation (64) pour évacuer des fuites de fluide.

4. Transmetteur de fluide selon la revendication 2, caractérisé en ce que la longueur axiale de la jupe (61) est au moins approximativement égale au déplacement maximal des parties de piston (17, 30).

5. Transmetteur de fluide selon la revendication 3 ou la revendication 4, caractérisé en ce que la jupe (61) est fixée à une collerette annulaire (60) faisant saillie axialement sur la surface frontale de la partie de piston (30), par rabattement de cette collerette.

6. Transmetteur de fluide selon une des revendications 1 à 5, caractérisé en ce que la partie de boîtier (12) comprenant la chambre d'entraînement (21) revêt la forme d'un couvercle qui vient en prise dans un logement de centrage circulaire (291) sur l'autre partie de boîtier (11) par une portée de centrage annulaire (14) faisant axialement saillie à partir d'une collerette annulaire (13), et cette partie de boîtier (12) est fixée à l'autre partie de boîtier (11) au moyen de vis (64) passant à travers la collerette annulaire (13).

7. Transmetteur de fluide selon une des revendications 1 à 6, caractérisé en ce que la partie de piston (30) délimitant la chambre de pompage (42) comprend une soupape d'aspiration (52) qui, de façon indépendante du déplacement de la partie de piston (30) est en communication avec un perçage d'arrivée côté boîtier (44, 49) pour le second fluide, ainsi qu'en commnunication avec la chambre de pompage (42).

8. Transmetteur de fluide selon une des revendications 1 à 7, caractérisé en ce que la soupape de retenue (33) est intégrée dans la partie de boîtier (11) comprenant la chambre de pompage (42).

9. Transmetteur de fluide selon une des revendications 1 à 8, caractérisé en ce qu'une soupape électromagnétique (25) est solidaire de la partie de boîtier (12) comprenant la chambre d'entraînement (21), cette soupape électromagnétique étant en communication par l'intermédiaire de perçages dans le boîtier (22 à 24) avec une arrivée (26) et une évacuation (27) pour le premier fluide et avec la chambre d'entraînement (21).